# FASCICULE DE BREVET EUROPEEN

(11) **EP 4 516 678 B1**
(45) Date de publication et mention de la délivrance du brevet: **14.10.2026**
(21) Numéro de dépôt: 24196891.6
(22) Date de dépôt: 28.08.2024
(51) Int. Cl.: B64D 27/40, B64C 3/32, B64D 27/16

(54) **ASSEMBLAGE D'UN LONGERON D'AILE ET D'UN MÂT RÉACTEUR ALIGNÉS HORIZONTALEMENT L'UN PAR RAPPORT À L'AUTRE**
VERBINDUNG EINES FLÜGELHOLMS UND EINES HORIZONTAL ZUEINANDER AUSGERICHTETEN REAKTORMASTES
ASSEMBLY OF A SPAR AND A JET PYLON HORIZONTALLY ALIGNED WITH EACH OTHER

(30) Priorité: 31.08.2023 FR 2309135
(43) Date de publication de la demande: 05.03.2025
(73) Titulaire: AIRBUS OPERATIONS, 31060 Toulouse Cedex 9 (FR)
(72) Inventeur: COMBES, Pierre-Antoine, 31060 TOULOUSE (FR); DE NICOLA, Marc, 31060 TOULOUSE (FR)
(74) Mandataire: Cabinet Le Guen Maillet

(56) Documents cités:
- FR-A1- 2 836 672
- FR-A1- 2 891 247
- FR-A1- 3 032 421
- US-B2- 10 583 930

## Description

### DOMAINE TECHNIQUE

La présente invention concerne un assemblage d'un longeron d'une aile d'aéronef avec un mât réacteur qui sont alignés horizontalement l'un avec l'autre et où les efforts tranchants et le couple moteur sont repris par des pions de cisaillement horizontaux. La présente invention concerne également un aéronef comportant un tel assemblage.

### ÉTAT DE LA TECHNIQUE ANTÉRIEURE

Un aéronef comporte classiquement au moins un moteur, en particulier un turboréacteur. Sous chaque aile et pour chaque moteur, l' aéronef comporte un mât réacteur qui est fixé à la structure de l'aile et le moteur est suspendu sous le mât réacteur.

Classiquement le mât réacteur est disposé sous l'aile et il y est fixé par différents moyens de fixation.

Afin de gagner en efficacité, les moteurs sont de plus en plus gros et le positionnement du mât réacteur sous l'aile limite les possibilités d'augmentation du fait que le moteur doit garder une distance minimale par rapport au sol.

Il est donc souhaitable de trouver un nouvel arrangement qui permet de gagner de la place au niveau de la jonction entre le mât réacteur et l'aile pour relever le moteur.

Les documents FR-A-2 836 672 et FR-A-2 891 247 divulguent des assemblages de l'état de la technique.

### EXPOSE DE L'INVENTION

Un objet de la présente invention est de proposer un assemblage d'un longeron d'une aile d'aéronef avec un mât réacteur qui assure une réduction de la hauteur de l'ensemble.

À cet effet, est proposé un assemblage pour aéronef comportant une aile, ledit assemblage comportant :
- un longeron de l'aile, où le longeron présente une paroi de contact percée de part et d'autre d'un plan médian vertical, d'un premier perçage parallèle à une direction longitudinale perpendiculaire à la paroi de contact,
- un mât réacteur disposé en bout du longeron le long de la direction longitudinale et présentant de part et d'autre du plan médian vertical, une paroi latérale globalement perpendiculaire à la paroi de contact et percée, pour le premier perçage qui est du même côté, d'un deuxième perçage aligné avec le premier perçage, où le mât réacteur présente une direction longitudinale qui est destinée à être orientée positivement dans le sens d'avancement de l'aéronef et globalement parallèle à l'axe longitudinal de l'aéronef, où le longeron de l'aile s'étend parallèlement à la direction longitudinale, où la paroi de contact s'étend dans un plan globalement perpendiculaire à la direction longitudinale, et
- pour chaque paire d'un premier perçage et d'un deuxième perçage alignés, un pion de cisaillement emmanché dans le premier perçage et le deuxième perçage,
ledit assemblage étant caractérisé en ce que les pions de cisaillement sont montés serrés dans les perçages correspondants, en ce que la paroi de contact est percée d'une pluralité de premiers alésages, chacun traversant la paroi de contact et parallèle à la direction longitudinale, en ce que le mât réacteur présente un longeron supérieur globalement perpendiculaire à la paroi de contact et percé, pour chaque premier alésage, d'un deuxième alésage parallèle à la direction longitudinale et aligné avec le premier alésage, et en ce que pour chaque paire d'un premier alésage et d'un deuxième alésage alignés, l'assemblage comporte un écrou et une vis, où la vis est vissée dans l'écrou à travers successivement le premier alésage et le deuxième alésage en prenant en sandwich le longeron supérieur et la paroi de contact.

Un tel assemblage permet de réduire la hauteur de l'assemblage et l'orientation horizontale des pions de cisaillement permet une reprise des efforts tranchants et du couple moteur. Avantageusement, les vis sont montées avec jeu dans les alésages correspondants. Avantageusement, le longeron supérieur est percé d'au moins un troisième alésage perpendiculaire à la direction longitudinale dans lequel le deuxième alésage débouche et l'écrou est un écrou cylindrique à goujon croisé logé dans le troisième alésage. Avantageusement, l'assemblage comporte une paroi intermédiaire disposée entre la paroi de contact et le longeron supérieur, pour chaque pion de cisaillement, la paroi intermédiaire est traversée par un perçage intermédiaire traversé par le pion de cisaillement, et lorsqu'il y a des vis, pour chaque vis, la paroi intermédiaire est traversée par un alésage intermédiaire traversé par la vis.

L'invention propose également un aéronef comportant une aile et un assemblage selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective d'un assemblage selon un premier mode de réalisation de l'invention,
Fig. 3 est une vue en perspective d'un assemblage selon un deuxième mode de réalisation de l'invention,
Fig. 4 est une vue en coupe selon le plan IV de l'assemblage de la Fig. 3, et
Fig. 5 est une vue de face d'un longeron d'aile d'un assemblage selon l'invention sans le mât réacteur.

### EXPOSÉ DÉTAILLÉ DE MODES DE RÉALISATION

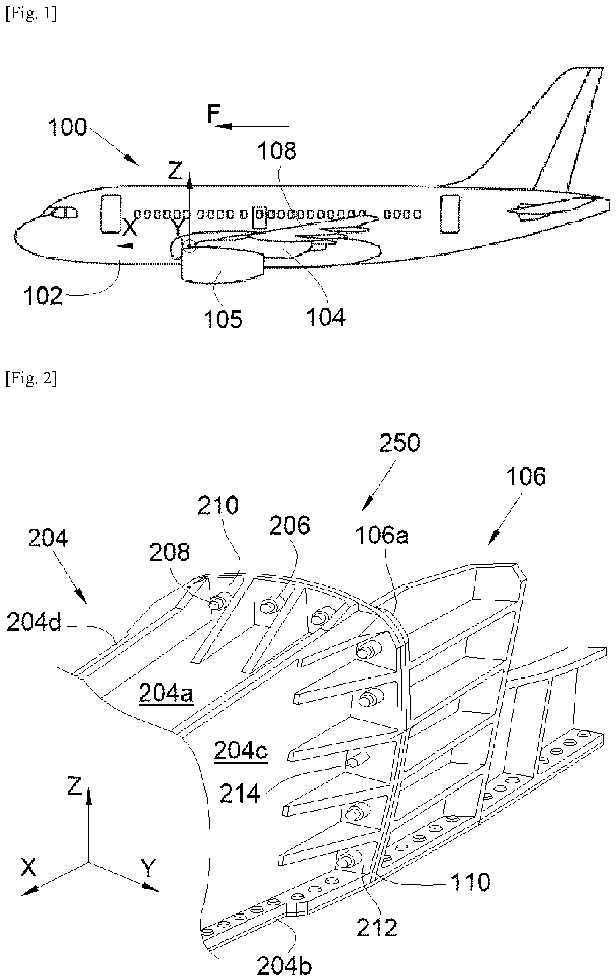

Dans la description qui suit, les termes relatifs à une position sont pris en référence à un aéronef en position d'avancement, c'est-à-dire comme il est représenté sur la Fig. 1, où la flèche F représente la direction d'avancement.

La Fig. 1 montre un aéronef 100 qui présente un fuselage 102 de part et d'autre duquel est disposée une aile 108 sous laquelle est fixé un moteur 105, en particulier un turboréacteur par l'intermédiaire d'un mât réacteur 104 qui est lui-même fixé à l'aile 108.

Dans la description qui suit, et par convention, on appelle X la direction longitudinale du mât réacteur 104 orientée positivement dans le sens d'avancement de l'aéronef 100 et globalement parallèle à l'axe longitudinal de l'aéronef 100, on appelle Y la direction transversale du mât réacteur 104 qui est horizontale lorsque l'aéronef 100 est au sol, et Z la direction verticale ou hauteur verticale lorsque l'aéronef 100 est au sol, ces trois directions X, Y et Z étant orthogonales entre elles.

Dans le mode de réalisation de l'invention présenté sur la Fig. 1, l'aéronef 100 comporte un moteur 105 sous chaque aile 108 de l'aéronef 100, mais il est possible de prévoir plusieurs moteurs 105 sous chaque aile 108.

L'aile 108 comporte entre autres des longerons 106 qui s'étendent parallèlement à la direction longitudinale X. Le longeron 106 de l'aile 108 présente une paroi de contact 106a qui s'étend dans un plan globalement perpendiculaire à la direction longitudinale X.

La solidarisation entre le longeron 106 de l'aile 108 et le mât réacteur 204 peut prendre différentes formes dont deux modes de réalisation sont montrés sur les Figs. 2, 3 et 4, mais d'autres solutions sont envisageables.

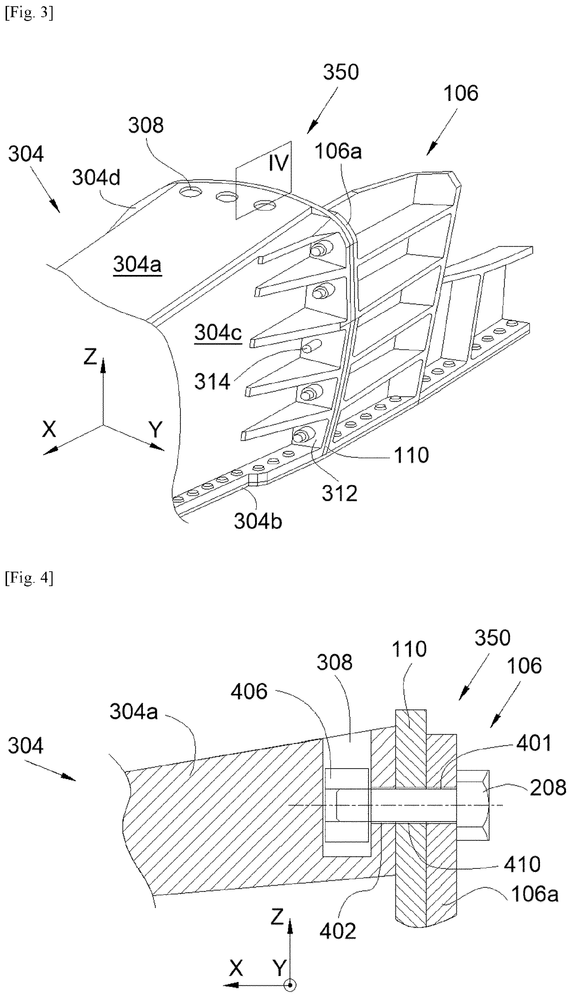

La Fig. 2 montre un premier mode de réalisation d'un assemblage 250 entre un longeron 106 de l'aile 108 et le mât réacteur 204 et les Figs. 3 et 4 montrent un deuxième mode de réalisation d'un assemblage 350 entre un longeron 106 de l'aile 108 et le mât réacteur 304. La différence entre le premier mode de réalisation et le deuxième mode de réalisation réside dans la forme du longeron supérieur 204a, 304a du mât réacteur 204, 304 et de sa fixation au longeron 106 de l'aile 108.

Le mât réacteur 204, 304 prend la forme d'un caisson qui comporte ici un longeron supérieur 204a, 304a, un longeron inférieur 204b, 304b et deux parois latérales 204c-d, 304c-d. Les différentes parois et les longerons sont solidaires les uns des autres de manière à former un caisson dont la section verticale est globalement trapézoïdale. Chaque longeron 204a-b, 304a-b et chaque paroi latérale 204c-d, 304c-d s'étendent dans un plan globalement parallèle à la direction longitudinale X, c'est-à-dire globalement perpendiculaire à la paroi de contact 106a.

Le mât réacteur 204, 304 est globalement symétrique par rapport à un plan médian vertical XZ.

Les parois latérales 204c-d, 304c-d sont disposées de part et d'autre du longeron supérieur 204a, 304a et donc du plan médian vertical XZ.

Le mât réacteur 204, 304 est disposé en bout du longeron 106 de l'aile 108 le long de la direction longitudinale X, c'est-à-dire dans le prolongement l'un de l'autre le long de la direction longitudinale X. Le mât réacteur 204, 304 prolonge ainsi le longeron 106 de l'aile 108 dans la direction longitudinale X.

Dans les modes de réalisation de l'invention présentés sur les Figs. 2 et 3, l'assemblage 250, 350 comporte, disposé symétriquement de part et d'autre du plan médian vertical XZ et donc de chaque côté du longeron supérieur 204a, 304a, un pion de cisaillement 214, 314. Il y a donc un pion de cisaillement 214, 314 à bâbord et un à tribord. Chaque pion de cisaillement 214, 314 est parallèle à la direction longitudinale X.

La paroi de contact 106a est ainsi percée de part et d'autre d'un plan médian vertical XZ, d'un premier perçage 502a-b parallèle à la direction longitudinale X.

Chaque paroi latérale 204c-d, 304c-d est percée, pour le premier perçage 502a-b qui est du même côté du plan médian vertical XZ, d'un deuxième perçage aligné avec le premier perçage 502a-b.

Chaque pion de cisaillement 214, 314 est emmanché dans un premier perçage 502a-b de la paroi de contact 106a, à savoir un premier perçage 502a à bâbord et un premier perçage 502b à tribord, et un deuxième perçage d'une paroi latérale 204c-d, 304c-d du mât réacteur 204, 304 ici dans une cornière 212, 312 de la paroi latérale 204c-d, 304c-d considérée. Le premier perçage 502a-b et le deuxième perçage associés sont alignés en position assemblée. Les premiers perçages 502a-b et les deuxièmes perçages sont disposés de part et d'autre du plan médian vertical XZ.

Il y a donc un pion de cisaillement 214, 314 emmanché dans un premier perçage 502a de la paroi de contact 106a et un deuxième perçage d'une paroi latérale 204c-d, 304c-d et un autre pion de cisaillement 214, 314 emmanché dans un premier perçage 502b de la paroi de contact 106a et un deuxième perçage de l'autre paroi latérale 204d-c, 304d-c.

Les pions de cisaillement 214, 314 reprennent les efforts tranchants et le couple moteur et ils sont montés serrés dans les perçages correspondants, y compris le perçage intermédiaire et décrit ci-dessous.

Avec un tel arrangement, en cas de rupture d'un pion de cisaillement 214, 314, le longeron 106 de l'aile 108 et le mât réacteur 204, 304 peuvent pivoter autour de l'autre pion de cisaillement 314, 214 et la rotation est stoppée par les moyens de fixation qui assurent la solidarisation entre le longeron 106 de l'aile 108 et le mât réacteur 204 et dont des modes sont décrits ci-dessous et qui transmettent alors les efforts axiaux ainsi que les efforts tranchants et le couple moteur.

La paroi de contact 106a est percée d'une pluralité de premiers alésages 401 où chacun traverse la paroi de contact 106a et est parallèle à la direction longitudinale X, c'est-à-dire perpendiculaire à la paroi de contact 106a.

Pour chaque premier alésage 401, le longeron supérieur 204a, 304a est percé d'un deuxième alésage 402 qui est également parallèle à la direction longitudinale X et aligné avec le premier alésage 401 en position assemblée.

Dans le premier mode de réalisation de l'invention, le deuxième alésage est réalisé dans une cornière 210 du longeron supérieur 204a où la cornière 210 est parallèle à la paroi de contact 106a.

Dans le deuxième mode de réalisation de l'invention, le deuxième alésage 402 est réalisé à partir d'un troisième alésage 308 qui est réalisé dans le longeron supérieur 304a perpendiculaire à la direction longitudinale X. Le deuxième alésage 402 débouche ainsi dans le troisième alésage 308.

Le troisième alésage 308 débouche au niveau d'une face supérieure du longeron supérieur 304a et il est préférentiellement borgne.

De la même manière, les parois latérales 204c-d, 304c-d comportent ici des cornières 212, 312 parallèles à la paroi de contact 106a et également traversées par des deuxièmes alésages alignés avec des premiers alésages de la paroi de contact 106a parallèlement à la direction longitudinale X.

La fixation du mât réacteur 204, 304 avec le longeron 106 de l'aile 108 est assurée par des systèmes vis-écrou. Ainsi, pour chaque paire d'un premier alésage 401 et d'un deuxième alésage 402 alignés, l'assemblage 250, 350 comporte un écrou 206, 406 et une vis 208.

La vis 208 est vissée dans l'écrou 206, 406 à travers successivement le premier alésage 401 de la paroi de contact 106a et le deuxième alésage 402 du longeron supérieur 204a, 304a prenant en sandwich le longeron supérieur 204a, 304a et la paroi de contact 106a entre la tête de la vis 208 et l'écrou 206, 406.

Avec un tel arrangement, la hauteur de l'assemblage est réduite du fait de l'alignement du longeron 106 de l'aile 108 et du mât réacteur 204, 304 et du fait de son orientation parallèle à la direction longitudinale X, chaque système vis-écrou travaille en tension uniquement en reprenant les efforts axiaux selon la direction longitudinale X, comme la poussée. La jonction entre le mât réacteur 204, 304 et le longeron 106 de l'aile 108 se fait ainsi sur un plan d'interface unique, le plan de la paroi de contact 106a où les systèmes vis-écrou sont disposés de manière à transmettre les efforts générés par le moteur 105 vers l'aile 108 tout en garantissant le non-décollement de la jonction.

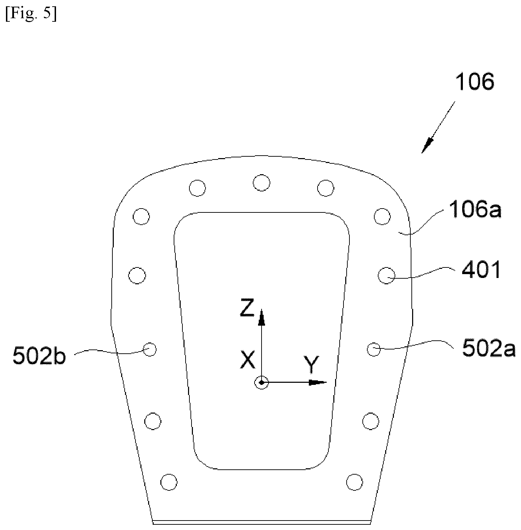

Dans le mode de réalisation de l'invention présenté à la Fig. 5, il y a onze systèmes vis-écrou avec trois au niveau du longeron supérieur 204a, 304a et quatre pour chaque paroi latérale 204c-d, 304c-d.

Avec un tel arrangement, en cas de rupture d'un système vis-écrou, les autres compensent et assurent le transfert des efforts axiaux, et en cas de rupture d'un pion de cisaillement 214, 314, le longeron 106 de l'aile 108 et le mât réacteur 204, 304 peuvent pivoter autour de l'autre pion de cisaillement 314, 214 et la rotation est stoppée par les systèmes vis-écrou qui transmettent alors les efforts axiaux ainsi que les efforts tranchants et le couple moteur.

Dans les modes de réalisation de l'invention présentés aux Figs. 2 et 3, l'assemblage 250, 350 comporte également une paroi intermédiaire 110 qui est disposée entre la paroi de contact 106a et le longeron supérieur 204a, 304a.

Pour chaque pion de cisaillement 214, 314, la paroi intermédiaire 110 est traversée par un perçage intermédiaire que le pion de cisaillement 214, 314 traverse.

Lorsqu'il y a des vis 208, pour chacune d'elles, la paroi intermédiaire 110 est traversée par un alésage intermédiaire 410 que la vis 208 traverse.

Dans le mode de réalisation de l'invention présenté à la Fig. 3 et à la Fig. 4, l'écrou 406 est un écrou cylindrique à goujon croisé (« barrel nut » en Anglais) qui est logé dans le troisième alésage 308 pour le bloquer en rotation lorsque la vis 208 est serrée.

Avec cet arrangement particulier, l'épaisseur du longeron supérieur 304a est augmentée car il n'est pas nécessaire de prévoir de la place pour les cornières 210 ce qui permet d'optimiser l'inertie du mât réacteur 304 afin de pouvoir passer des efforts plus importants dans le mât réacteur 304.

## Revendications

1. Assemblage (250, 350) pour aéronef (100) comportant une aile (108), ledit assemblage (250, 350) comportant :
- un longeron (106) de l'aile (108), où le longeron (106) présente une paroi de contact (106a) percée de part et d'autre d'un plan médian vertical (XZ), d'un premier perçage (502a-b) parallèle à une direction longitudinale (X) perpendiculaire à la paroi de contact (106a),
- un mât réacteur (104, 204, 304) disposé en bout du longeron (106) le long de la direction longitudinale (X) et présentant de part et d'autre du plan médian vertical (XZ), une paroi latérale (204c-d, 304c-d) globalement perpendiculaire à la paroi de contact (106a) et percée, pour le premier perçage (502a-b) qui est du même côté, d'un deuxième perçage aligné avec le premier perçage (502a-b), où le mât réacteur (104, 204, 304) présente une direction longitudinale (X) qui est destinée à être orientée positivement dans le sens d'avancement de l'aéronef (100) et globalement parallèle à l'axe longitudinal de l'aéronef (100), où le longeron (106) de l'aile (108) s'étend parallèlement à la direction longitudinale (X), où la paroi de contact (106a) s'étend dans un plan globalement perpendiculaire à la direction longitudinale (X), et
- pour chaque paire d'un premier perçage (502a-b) et d'un deuxième perçage alignés, un pion de cisaillement (214, 314) emmanché dans le premier perçage (502a-b) et le deuxième perçage,
ledit assemblage (250, 350) étant **caractérisé en ce que** les pions de cisaillement (214, 314) sont montés serrés dans les perçages correspondants, **en ce que** la paroi de contact (106a) est percée d'une pluralité de premiers alésages (401), chacun traversant la paroi de contact (106a) et parallèle à la direction longitudinale (X), **en ce que** le mât réacteur (104, 204, 304) présente un longeron supérieur (204a, 304a) globalement perpendiculaire à la paroi de contact (106a) et percé, pour chaque premier alésage (401), d'un deuxième alésage (402) parallèle à la direction longitudinale (X) et aligné avec le premier alésage (401), et **en ce que** pour chaque paire d'un premier alésage (401) et d'un deuxième alésage (402) alignés, l'assemblage (250, 350) comporte un écrou (206, 406) et une vis (208), où la vis (208) est vissée dans l'écrou (206, 406) à travers successivement le premier alésage (401) et le deuxième alésage (402) en prenant en sandwich le longeron supérieur (204a, 304a) et la paroi de contact (106a).

2. Assemblage (250, 350) selon la revendication 1, **caractérisé en ce que** les vis (208) sont montées avec jeu dans les alésages correspondants.

3. Assemblage (350) selon l'une des revendications 1 ou 2, **caractérisé en ce que** le longeron supérieur (304a) est percé d'au moins un troisième alésage (308) perpendiculaire à la direction longitudinale (X) dans lequel le deuxième alésage (402) débouche et **en ce que** l'écrou (406) est un écrou cylindrique à goujon croisé logé dans le troisième alésage (308).

4. Assemblage (250, 350) selon l'une des revendications 1 à 3 **caractérisé en ce qu'**il comporte une paroi intermédiaire (110) disposée entre la paroi de contact (106a) et le longeron supérieur (204a, 304a), **en ce que** pour chaque pion de cisaillement (214, 314), la paroi intermédiaire (110) est traversée par un perçage intermédiaire traversé par le pion de cisaillement (214, 314), et **en ce que** lorsqu'il y a des vis (208), pour chaque vis (208), la paroi intermédiaire (110) est traversée par un alésage intermédiaire (410) traversé par la vis (208).

5. Aéronef (100) comportant une aile (108) et un assemblage (250, 350) selon l'une des revendications précédentes.

## Patentansprüche

1. Anordnung (250, 350) für ein Luftfahrzeug (100), das eine Tragfläche (108) umfasst, die Anordnung (250, 350) umfassend:
- einen Holm (106) der Tragfläche (108), wobei der Holm (106) eine Kontaktwand (106a) aufweist, die beidseits einer vertikalen Mittelebene (XZ) mit einer ersten Öffnung (502a-b) durchbohrt ist, die parallel zu einer Längsrichtung (X) verläuft, die senkrecht zu der Kontaktwand (106a) verläuft,
- einen Triebwerkspylon (104, 204, 304), der am Ende des Holms (106) entlang der Längsrichtung (X) angeordnet ist und beidseits der vertikalen Mittelebene (XZ) eine Seitenwand (204c-d, 304c-d) aufweist, die im Wesentlichen senkrecht zu der Kontaktwand (106a) verläuft und für die erste Öffnung (502a-b), die sich auf der gleichen Seite befindet, mit einer zweiten Öffnung durchbohrt ist, die auf die erste Öffnung (502a-b) ausgerichtet ist, wobei der Triebwerkspylon (104, 204, 304) eine Längsrichtung (X) aufweist, die dazu bestimmt ist, in Flugrichtung des Luftfahrzeugs (100) und im Wesentlichen parallel zur Längsachse des Luftfahrzeugs (100) positiv ausgerichtet zu sein, wobei sich der Holm (106) der Tragfläche (108) parallel zu der Längsrichtung (X) erstreckt, wobei sich die Kontaktwand (106a) in einer Ebene erstreckt, die im Wesentlichen senkrecht zu der Längsrichtung (X) verläuft, und
- für jedes Paar aus einer ersten Öffnung (502a-b) und einer zweiten Öffnung, die ausgerichtet sind, einen Scherstift (214, 314), der in die erste Öffnung (502a-b) und die zweite Öffnung eingepasst ist,
wobei die Anordnung (250, 350) **dadurch gekennzeichnet ist, dass** die Scherstifte (214, 314) in die entsprechenden Öffnungen festsitzend montiert sind, dass die Kontaktwand (106a) mit einer Mehrzahl von ersten Bohrungen (401) durchbohrt ist, von denen jede die Kontaktwand (106a) durchquert und parallel zu der Längsrichtung (X) verläuft, dass der Triebwerkspylon (104, 204, 304) einen oberen Holm (204a, 304a) aufweist, der im Wesentlichen senkrecht zu der Kontaktwand (106a) ist und für jede erste Bohrung (401) mit einer zweiten Bohrung (402) durchbohrt ist, die parallel zu der Längsrichtung (X) verläuft und auf die erste Bohrung (401) ausgerichtet ist, und dass die Anordnung (250, 350) für jedes Paar aus einer ersten Bohrung (401) und einer zweiten Bohrung (402), die ausgerichtet sind, eine Mutter (206, 406) und eine Schraube (208) umfasst, wobei die Schraube (208) nacheinander durch die erste Bohrung (401) und die zweite Bohrung (402) in die Mutter (206, 406) eingeschraubt ist, wobei der obere Holm (204a, 304a) und die Kontaktwand (106a) sandwichartig aufgenommen werden.

2. Anordnung (250, 350) nach Anspruch 1, **dadurch gekennzeichnet, dass** die Schrauben (208) mit Spiel in den entsprechenden Bohrungen montiert sind.

3. Anordnung (350) nach einem der Ansprüche 1 oder 2, **dadurch gekennzeichnet, dass** der obere Holm (304a) mit mindestens einer dritten Bohrung (308) senkrecht zu der Längsrichtung (X) durchbohrt ist, in welche die zweite Bohrung (402) mündet, und dass die Mutter (406) ein Quermutterbolzen ist, der in der dritten Bohrung (308) aufgenommen ist.

4. Anordnung (250, 350) nach einem der Ansprüche 1 bis 3, **dadurch gekennzeichnet, dass** sie eine Zwischenwand (110) umfasst, die zwischen der Kontaktwand (106a) und dem oberen Holm (204a, 304a) angeordnet ist, dass die Zwischenwand (110) für jeden Scherstift (214, 314) von einer Zwischenöffnung durchquert wird, die von dem Scherstift (214, 314) durchquert wird, und dass, wenn es Schrauben (208) gibt, die Zwischenwand (110) für jede Schraube (208) von einer Zwischenbohrung (410) durchquert wird, die von der Schraube (208) durchquert wird.

5. Luftfahrzeug (100), das eine Tragfläche (108) und eine Anordnung (250, 350) nach einem der vorhergehenden Ansprüche umfasst.

## Claims

1. Assembly (250, 350) for an aircraft (100) comprising a wing (108), said assembly (250, 350) comprising:
- a spar (106) of the wing (108), wherein the spar (106) has a contact wall (106a) which is pierced, on either side of a vertical midplane (XZ), by a first hole (502a-b) parallel to a longitudinal direction (X) perpendicular to the contact wall (106a),
- an engine pylon (104, 204, 304) disposed at the end of the spar (106) along the longitudinal direction (X) and having, on either side of the vertical midplane (XZ), a lateral wall (204c-d, 304c-d) which is generally perpendicular to the contact wall (106a) and pierced, for the first hole (502a-b) that is on the same side, by a second hole aligned with the first hole (502a-b), wherein the engine pylon (104, 204, 304) has a longitudinal direction (X) which is intended to be oriented positively in the direction of travel of the aircraft (100) and generally parallel to the longitudinal axis of the aircraft (100), wherein the spar (106) of the wing (108) extends parallel to the longitudinal direction (X), wherein the contact wall (106a) extends in a plane generally perpendicular to the longitudinal direction (X), and
- for each pair of a first hole (502a-b) and a second hole that are aligned, a shear pin (214, 314) fitted into the first hole (502a-b) and the second hole,
said assembly (250, 350) being **characterized in that** the shear pins (214, 314) are mounted clamped in the corresponding holes, and **in that** the contact wall (106a) is pierced by a plurality of first bores (401), each passing through the contact wall (106a) and parallel to the longitudinal direction (X), **in that** the engine pylon (104, 204, 304) has an upper spar (204a, 304a) which is generally perpendicular to the contact wall (106a) and pierced, for each first bore (401), by a second bore (402) parallel to the longitudinal direction (X) and aligned with the first bore (401), and **in that**, for each pair of a first bore (401) and a second bore (402) that are aligned, the assembly (250, 350) comprises a nut (206, 406) and a screw (208), wherein the screw (208) is screwed into the nut (206, 406) successively through the first bore (401) and the second bore (402), sandwiching the upper spar (204a, 304a) and the contact wall (106a).

2. Assembly (250, 350) according to Claim 1, **characterized in that** the screws (208) are mounted with play in the corresponding bores.

3. Assembly (350) according to Claim 1 or 2, **characterized in that** the upper spar (304a) is pierced by at least a third bore (308) which is perpendicular to the longitudinal direction (X) and into which the second bore (402) opens out, and **in that** the nut (406) is a barrel nut housed in the third bore (308).

4. Assembly (250, 350) according to any of Claims 1 to 3, **characterized in that** it comprises an intermediate wall (110) disposed between the contact wall (106a) and the upper spar (204a, 304a), **in that**, for each shear pin (214, 314), the intermediate wall (110) is passed through by an intermediate hole through which the shear pin (214, 314) passes, and **in that** when there are screws (208), for each screw (208), the intermediate wall (110) is passed through by an intermediate bore (410) through which the screw (208) passes.

5. Aircraft (100) comprising a wing (108) and an assembly (250, 350) according to any of the preceding claims.
